(19) Europäisches Patentamt
European Patent Office
Office européen des brevets

(11) **EP 4 349 877 A1**

(12) **EUROPEAN PATENT APPLICATION**
published in accordance with Art. 153(4) EPC

(43) Date of publication:
**10.04.2024 Bulletin 2024/15**

(21) Application number: **22811328.8**

(22) Date of filing: **24.05.2022**

(51) International Patent Classification (IPC):
**C08F 236/12** (2006.01)    **C08C 19/02** (2006.01)
**C08F 8/04** (2006.01)    **C08L 15/00** (2006.01)

(52) Cooperative Patent Classification (CPC):
**C08C 19/02; C08F 8/04; C08F 236/12; C08L 15/00**

(86) International application number:
**PCT/JP2022/021275**

(87) International publication number:
**WO 2022/250058 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.05.2021 JP 2021087193**

(71) Applicant: **Zeon Corporation
Tokyo 100-8246 (JP)**

(72) Inventors:
• **ONO, Kentaro
Tokyo 100-8246 (JP)**
• **KATANO, Chikara
Tokyo 100-8246 (JP)**

(74) Representative: **Maiwald GmbH
Elisenhof
Elisenstraße 3
80335 München (DE)**

(54) **NITRILE GROUP-CONTAINING COPOLYMER RUBBER, RUBBER COMPOSITION, AND CROSSLINKED RUBBER**

(57) The present invention provides a nitrile group-containing copolymer rubber comprising an acrylonitrile unit (a), a monomer unit (b) of an $\alpha,\beta$-ethylenically unsaturated nitrile monomer other than acrylonitrile, and a conjugated diene monomer unit (c) and having an iodine value of 120 or less, wherein the total content of the acrylonitrile unit (a) and the monomer unit (b) of an $\alpha,\beta$-ethylenically unsaturated nitrile monomer other than acrylonitrile is 1 to 50% by weight in the total monomer units, and the content ratio of the acrylonitrile unit (a) and the monomer unit (b) of an $\alpha,\beta$-ethylenically unsaturated nitrile monomer other than acrylonitrile is 10:90 to 90:10 in a weight ratio of "content of acrylonitrile unit (a) : content of monomer unit (b) of $\alpha,\beta$-ethylenically unsaturated nitrile monomer other than acrylonitrile".

EP 4 349 877 A1

**Description**

TECHNICAL FIELD

The present invention relates to a nitrile group-containing copolymer rubber that can give a cross-linked rubber having good normal physical properties and excellent in heat resistance, oil resistance, and resistance to hardening in oil under a heated environment (specifically, being small in change in glass transition temperature and change in hardness when immersed in an oil containing a polycyclic condensed aromatic compound under a heated environment). The present invention also relates to a rubber composition and a cross-linked rubber obtained by using the nitrile group-containing copolymer rubber.

BACKGROUND ART

A saturated nitrile group-containing copolymer rubber represented by hydrogenated acrylonitrile-butadiene copolymer rubber is superior in heat resistance, oil resistance, ozone resistance, and the like compared with a common nitrile group-containing copolymer rubber having a lot of carbon-carbon unsaturated bonds in a main chain structure, such as acrylonitrile-butadiene copolymer rubber, and thus, is suitably used as a rubber part such as seals, hoses, tubes for vehicle use. On the other hand, in recent years, in addition to the oil resistance, rubber parts for vehicle use have been required to be excellent in the resistance to hardening in oil.

For example, Patent Document 1 discloses a nitrile rubber composition comprising 50 to 90 parts by weight of a filler (B) and 0 to 29.9 parts by weight of an adipic ester-based plasticizer and/or an ether ester-based plasticizer (C) with respect to 100 parts by weight of a nitrile group-containing highly saturated copolymer rubber (A) containing 14 wt% or more and less than 21 wt% of an $\alpha,\beta$-ethylenically unsaturated nitrile monomer unit and having an iodine value of 120 or less. According to the cross-linkable nitrile rubber composition disclosed in Patent Document 1, a cross-linked rubber excellent in resistance to hardening in oil can be obtained. On the other hand, rubber parts such as seals, hoses, tubes, and the like for automobiles are often used in a high-temperature environment, and therefore, the rubber material used for these rubber parts may be required to be excellent in resistance to hardening in oil under a heated environment, more specifically, excellent in resistance to hardening in oil after being stored in a heated environment from the viewpoint that it can be suitably used for such applications. In contrast, in Patent Document 1, although the oil resistance and the resistance to hardening in oil have been considered, the resistance to hardening in oil under a heated environment has not been considered.

RELATED ART DOCUMENT

PATENT DOCUMENT

Patent Document 1: WO 2017/047571A

SUMMARY OF THE INVENTION

PROBLEM TO BE SOLVED BY THE INVENTION

The present invention has been made in consideration of such circumstances. The present invention aims to provide a nitrile group-containing copolymer rubber that can give a cross-linked rubber having good normal physical properties and excellent in heat resistance, oil resistance, and resistance to hardening in oil under a heated environment (specifically, being small in change in glass transition temperature and change in hardness when immersed in an oil containing a polycyclic condensed aromatic compound after being stored in a heated environment).

Further, the present invention also aims to provide a rubber composition and a cross-linked rubber obtained by using the nitrile group-containing copolymer rubber.

MEANS FOR SOLVING THE PROBLEMS

As a result of extensive studies to achieve the above object, the present inventors have found that the above object can be achieved by a nitrile group-containing copolymer rubber comprising, as a nitrile group-containing monomer unit, an acrylonitrile unit and a monomer unit of an $\alpha,\beta$-ethylenically unsaturated nitrile monomer other than acrylonitrile in a predetermined content ratio, and having an iodine value of 120 or less. This finding has led to the completion of the present invention.

That is, according to the present invention, there is provided a nitrile group-containing copolymer rubber comprising an acrylonitrile unit (a), a monomer unit (b) of an α,β-ethylenically unsaturated nitrile monomer other than acrylonitrile, and a conjugated diene monomer unit (c) and having an iodine value of 120 or less, wherein

the total content of the acrylonitrile unit (a) and the monomer unit (b) of an α,β-ethylenically unsaturated nitrile monomer other than acrylonitrile is 1 to 50% by weight in the total monomer units, and
the content ratio of the acrylonitrile unit (a) and the monomer unit (b) of an α,β-ethylenically unsaturated nitrile monomer other than acrylonitrile is 10:90 to 90:10 in a weight ratio of "content of acrylonitrile unit (a) : content of monomer unit (b) of α,β-ethylenically unsaturated nitrile monomer other than acrylonitrile".

In the nitrile group-containing copolymer rubber according to the present invention, it is preferable that the α,β-ethylenically unsaturated nitrile monomer other than acrylonitrile constituting the monomer unit (b) of an α,β-ethylenically unsaturated nitrile monomer other than acrylonitrile have 2 to 5 carbon atoms excluding the cyano group.

In the nitrile group-containing copolymer rubber according to the present invention, it is preferable that the total content of the acrylonitrile unit (a) and the monomer unit (b) of an α,β-ethylenically unsaturated nitrile monomer other than acrylonitrile be 10 to 45% by weight in the total monomer units.

In the nitrile group-containing copolymer rubber according to the present invention, it is preferable that the iodine value be 80 or less.

In the nitrile group-containing copolymer rubber according to the present invention, it is preferable that the content ratio of the acrylonitrile unit (a) and the monomer unit (b) of an α,β-ethylenically unsaturated nitrile monomer other than acrylonitrile be 20:80 to 80:20 in a weight ratio of "content of acrylonitrile unit (a) : content of monomer unit (b) of α,β-ethylenically unsaturated nitrile monomer other than acrylonitrile".

In the nitrile group-containing copolymer rubber according to the present invention, it is preferable that the content ratio of the acrylonitrile unit (a) and the monomer unit (b) of α,β-ethylenically unsaturated nitrile monomer other than acrylonitrile be 25:75 to 75:25 in a weight ratio of "content of acrylonitrile unit (a) : content of monomer unit (b) of α,β-ethylenically unsaturated nitrile monomer other than acrylonitrile".

In the nitrile group-containing copolymer rubber according to the present invention, it is preferable that the content of the conjugated diene monomer unit (c) be 10 to 90% by weight.

Further, the present invention provides a rubber composition comprising the nitrile group-containing copolymer rubber according to the present invention above blended with a cross-linking agent.

In addition, the present invention provides a cross-linked rubber obtained by cross-linking the rubber composition according to the present invention above.

EFFECTS OF THE INVENTION

The present invention can provide a nitrile group-containing copolymer rubber that can give a cross-linked rubber having good normal physical properties and excellent in heat resistance, oil resistance, and resistance to hardening in oil under a heated environment (specifically, being small in change in glass transition temperature and change in hardness when immersed in an oil containing a polycyclic condensed aromatic compound after being stored in a heated environment). Further, the present invention can provide a rubber composition and a cross-linked rubber obtained by using the nitrile group-containing copolymer rubber.

DESCRIPTION OF EMBODIMENTS

<Nitrile group-containing copolymer rubber>

A nitrile group-containing copolymer rubber according to the present invention comprises an acrylonitrile unit (a), a monomer unit (b) of an α,β-ethylenically unsaturated nitrile monomer other than acrylonitrile, and a conjugated diene monomer unit (c) and having an iodine value of 120 or less, wherein

the total content of the acrylonitrile unit (a) and the monomer unit (b) of an α,β-ethylenically unsaturated nitrile monomer other than acrylonitrile is 1 to 50% by weight in the total monomer units, and
the content ratio of the acrylonitrile unit (a) and the monomer unit (b) of an α,β-ethylenically unsaturated nitrile monomer other than acrylonitrile is 10:90 to 90:10 in a weight ratio of "content of acrylonitrile unit (a) : content of monomer unit (b) of α,β-ethylenically unsaturated nitrile monomer other than acrylonitrile".

The nitrile group-containing copolymer rubber according to the present invention contains, as a nitrile group-containing monomer unit, an acrylonitrile unit (a), and a monomer unit (b) of an α,β-ethylenically unsaturated nitrile monomer other than acrylonitrile. The α,β-ethylenically unsaturated nitrile monomer other than acrylonitrile constituting the monomer unit (b) of an α,β-ethylenically unsaturated nitrile monomer other than acrylonitrile is not limited so long as it is an α,β-ethylenically unsaturated compound having a nitrile group (excluding acrylonitrile). Examples thereof include α-halogenoacrylonitriles such as α-chloroacrylonitrile, and α-bromoacrylonitrile; α-alkylacrylonitriles such as methacrylonitrile and ethanacrylonitrile; and the like. Among these, an α,β-ethylenically unsaturated nitrile monomer having 2 to 5 carbon atoms excluding the cyano group is preferable, an α-alkylacrylonitrile is more preferable, and methacrylonitrile is particularly preferable. As the α,β-ethylenically unsaturated nitrile monomer other than acrylonitrile, a plurality of these may be used in combination.

In the nitrile group-containing copolymer rubber according to the present invention, the total content of the acrylonitrile unit (a) and the monomer unit (b) of an α,β-ethylenically unsaturated nitrile monomer other than acrylonitrile is 1 to 50 wt%, preferably 10 to 45 wt%, more preferably 15 to 42 wt%, still more preferably 20 to 40 wt%, particularly preferably 26 to 36 wt%. When the total content of the acrylonitrile unit (a) and the monomer unit (b) of an α,β-ethylenically unsaturated nitrile monomer other than acrylonitrile is too small, the obtained cross-linked rubber is liable to be inferior in oil resistance. By contrast, when the content thereof is too large, there is a possibility that the resistance to hardening in oil is decreased.

Further, the content ratio of the acrylonitrile unit (a) and the monomer unit (b) of an α,β-ethylenically unsaturated nitrile monomer other than acrylonitrile in the nitrile group-containing copolymer rubber according to the present invention is, in terms of weight ratio of "content of acrylonitrile unit (a) : content of monomer unit (b) of α,β-ethylenically unsaturated nitrile monomer other than acrylonitrile", 10:90 to 90:10, preferably 12:88 to 88:12, more preferably 15:85 to 85:15, still more preferably 20:80 to 80:20, furthermore preferably 25:75 to 75:25, particularly preferably 30:70 to 60:40. When the content of the acrylonitrile unit (a) is too small, the obtained cross-linked rubber may be inferior in tensile strength, and oil resistance. By contrast, when the content of the monomer unit (b) of an α,β-ethylenically unsaturated nitrile monomer other than acrylonitrile is too small, the obtained cross-linked rubber may be inferior in oil resistance and resistance to hardening in oil under a heated environment.

The content of the acrylonitrile unit (a) in the nitrile group-containing copolymer rubber according to the present invention may be in the above range in relation to the monomer unit (b) of an α,β-ethylenically unsaturated nitrile monomer other than acrylonitrile, but is preferably 1 to 45 wt%, more preferably 5 to 40 wt%, still more preferably 10 to 37.5 wt%, particularly preferably 12 to 25 wt% based on the total monomer units. In addition, the content of the monomer unit (b) of an α,β-ethylenically unsaturated nitrile monomer other than acrylonitrile in the nitrile group-containing copolymer rubber according to the present invention may be in the above range in relation to the acrylonitrile unit (a), but is preferably 1 to 45 wt%, more preferably 5 to 40 wt%, still more preferably 10 to 37.5 wt%, particularly preferably 12 to 25 wt% based on the total monomer units. By setting the content of the acrylonitrile unit (a) and the content of the monomer unit (b) of an α,β-ethylenically unsaturated nitrile monomer other than acrylonitrile within the above ranges, the obtained cross-linked rubber can be made more excellent in heat resistance, oil resistance, and resistance to hardening in oil under a heated environment.

As the conjugated diene monomer constituting the conjugated diene monomer unit (c), conjugated diene monomers having 4 to 6 carbon atoms such as 1,3-butadiene, isoprene, 2,3-dimethyl-1,3-butadiene, 1,3-pentadiene, and chloroprene are preferable, 1,3-butadiene and isoprene are more preferable, and 1,3-butadiuene is particularly preferable. The conjugated diene monomers may be used alone or in combination.

In the nitrile group-containing copolymer rubber according to the present invention, the content of the conjugated diene monomer unit (c) (including hydrogenated moieties) is preferably 10 to 90 wt%, more preferably from 20 to 80 wt%, still more preferably from 30 to 70 wt%, particularly preferably 35 to 65 wt% based on the total monomer units. By setting the content of the conjugated diene monomer unit within the above-mentioned range, a cross-linked rubber excellent in rubber elasticity can be obtained while keeping the heat resistance and the chemical stability good.

Further, in addition to the acrylonitrile unit (a), the monomer unit (b) of an α,β-ethylenically unsaturated nitrile monomer other than acrylonitrile, and the conjugated diene monomer unit (c), it is preferable that the nitrile group-containing copolymer rubber according to the present invention further contain a carboxyl group-containing monomer unit (d). By further incorporating the carboxyl group-containing monomer unit (d), a carboxyl group can be introduced into the nitrile group-containing copolymer rubber according to the present invention.

The carboxyl group-containing monomer constituting the carboxyl group-containing monomer unit (d) is not particularly limited so long as the monomer having one or more unsubstituted (free) carboxyl groups which are not esterified etc. Examples thereof include α,β-ethylenically unsaturated monocarboxylic acid monomers, α,β-ethylenically unsaturated polyvalent carboxylic acid monomers, α,β-ethylenically unsaturated dicarboxylic acid monoester monomers, and the like. The carboxyl group-containing monomer also includes one having a carboxyl group that forms a carboxylate. In addition, an anhydride of an α,β-ethylenically unsaturated polyvalent carboxylic acid can be used as the carboxyl group-containing monomer since its acid anhydride group is cleaved to form a carboxyl group after copolymerization.

Examples of the α,β-ethylenically unsaturated monocarboxylic acid monomers include acrylic acid, methacrylic acid, ethylacrylic acid, crotonic acid, cinnamic acid, and the like.

Examples of the α,β-ethylenically unsaturated polyvalent carboxylic acid monomers include butenedioic acids such as fumaric acid and maleic acid, itaconic acid, citraconic acid, mesaconic acid, glutaconic acid, allylmalonic acid, teraconic acid, and the like. Examples of the anhydride of the $\alpha,\beta$-ethylenically unsaturated polyvalent carboxylic acid include maleic anhydride, itaconic anhydride, citraconic anhydride, and the like.

Examples of the $\alpha,\beta$-ethylenically unsaturated dicarboxylic acid monoester monomers include maleic acid monoalkyl esters such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkyl cycloalkyl esters such as monomethyl cyclopentyl maleate and monoethyl cyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethyl cyclopentyl fumarate and monoethyl cyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethyl cyclopentyl citraconate and monoethyl cyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkyl cycloalkyl esters such as monomethyl cyclopentyl itaconate, and monoethyl cyclohexyl itaconate; and the like.

The carboxyl group-containing monomers may be used alone or in combination. Among these, from the viewpoint of making the effects of the present invention further remarkable, the $\alpha,\beta$-ethylenically unsaturated monocarboxylic acid monomers are preferable, acrylic acid and methacrylic acid are more preferable, methacrylic acid is particularly preferable.

The content of the carboxyl group-containing monomer unit (d) in the nitrile group-containing copolymer rubber according to the present invention is preferably 0.1 to 10 wt%, more preferably 0.5 to 8 wt%, still more preferably 1 to 5 wt% based on the total monomer units. By setting the content of the carboxyl group-containing monomer unit within the above-mentioned range, it is possible to make the mechanical properties of the obtained cross-linked rubber better.

Further, in addition to the acrylonitrile unit (a), the monomer unit (b) of an $\alpha,\beta$-ethylenically unsaturated nitrile monomer other than acrylonitrile, and the conjugated diene monomer unit (c), and the carboxyl group-containing monomer unit (d) which is contained in accordance with need, the nitrile group-containing copolymer rubber according to the present invention may contain an $\alpha,\beta$-ethylenically unsaturated monocarboxylic acid ester monomer unit (e).

The $\alpha,\beta$-ethylenically unsaturated monocarboxylic acid ester monomer constituting the $\alpha,\beta$-ethylenically unsaturated monocarboxylic acid ester monomer unit (e) is not particularly limited. Examples thereof include $\alpha,\beta$-ethylenically unsaturated monocarboxylic acid alkyl ester monomers, $\alpha,\beta$-ethylenically unsaturated monocarboxylic acid alkoxyalkyl ester monomers, $\alpha,\beta$-ethylenically unsaturated monocarboxylic acid aminoalkyl ester monomers, $\alpha,\beta$-ethylenically unsaturated monocarboxylic acid hydroxyalkyl ester monomers, and $\alpha,\beta$-ethylenically unsaturated monocarboxylic acid fluoroalkyl ester monomers, and the like.

Among these, $\alpha,\beta$-ethylenically unsaturated monocarboxylic acid alkyl ester monomers and $\alpha,\beta$-ethylenically unsaturated monocarboxylic acid alkoxyalkyl ester monomers are preferred, and $\alpha,\beta$-ethylenically unsaturated monocarboxylic acid alkoxyalkyl ester monomers are more preferred.

By incorporating the $\alpha,\beta$-ethylenically unsaturated monocarboxylic acid ester monomer unit (e), the cold resistance of the obtained cross-linked rubber can be improved.

The $\alpha,\beta$-ethylenically unsaturated monocarboxylic acid alkyl ester monomers preferably have an alkyl group having 3 to 10 carbon atoms, more preferably have an alkyl group having 3 to 8 carbon atoms, and still more preferably have an alkyl group having 4 to 6 carbon atoms, as the alkyl group.

Specific examples of the $\alpha,\beta$-ethylenically unsaturated monocarboxylic acid alkyl ester monomers include acrylic acid alkyl ester monomers such as methyl acrylate, ethyl acrylate, propyl acrylate, isobutyl acrylate, n-butyl acrylate, n-pentyl acrylate, 2-ethylhexyl acrylate, and n-dodecyl acrylate; acrylic acid cycloalkyl ester monomers such as cyclopentyl acrylate and cyclohexyl acrylate; acrylic acid alkylcycloalkyl ester monomers such as methylcyclopentyl acrylate, ethylcyclopentyl acrylate, and methylcyclohexyl acrylate; methacrylic acid alkyl ester monomers such as methyl methacrylate, ethyl methacrylate, propyl methacrylate, n-butyl methacrylate, n-pentyl methacrylate, and n-octyl methacrylate; methacrylic acid cycloalkyl ester monomers such as cyclopentyl methacrylate, cyclohexyl methacrylate, and cyclopentyl methacrylate; methacrylic acid alkylcycloalkyl ester monomers such as methylcyclopentyl methacrylate, ethylcyclopentyl methacrylate, and methylcyclohexyl methacrylate; crotonic acid alkyl ester monomers such as propyl crotonate, n-butyl crotonate, and 2-ethylhexyl crotonate; crotonic acid cycloalkyl ester monomers such as cyclopentyl crotonate, cyclohexyl crotonate, and cyclooctyl crotonate; crotonic acid alkylcycloalkyl ester monomers such as methylcyclopentyl crotonate and methylcyclohexyl crotonate; and the like.

Further, the $\alpha,\beta$-ethylenically unsaturated monocarboxylic acid alkoxyalkyl ester monomers preferably have an alkoxyalkyl group having 2 to 8 carbon atoms, more preferably have an alkoxyalkyl group having 2 to 6 carbon atoms, and still more preferably have an alkoxyalkyl group having 2 to 4 carbon atoms, as the alkoxy alkyl group.

Specific examples of the α,β-ethylenically unsaturated monocarboxylic acid alkoxyalkyl ester monomers include acrylic acid alkoxyalkyl ester monomers such as methoxymethyl acrylate, methoxyethyl acrylate, methoxybutyl acrylate, ethoxymethyl acrylate, ethoxyethyl acrylate, ethoxypropyl acrylate, ethoxydodecyl acrylate, n-propoxyethyl acrylate, i-propoxyethyl acrylate, n-butoxyethyl acrylate, i-butoxyethyl acrylate, t-butoxyethyl acrylate, methoxypropyl acrylate, and methoxybutyl acrylate; methacrylic acid alkoxyalkyl ester monomers such as methoxymethyl methacrylate, methoxyethyl methacrylate, methoxybutyl methacrylate, ethoxymethyl methacrylate, ethoxyethyl methacrylate, ethoxypentyl methacrylate, n-propoxyethyl methacrylate, i-propoxyethyl methacrylate, n-butoxyethyl methacrylate, i-butoxyethyl methacrylate, t-butoxyethyl methacrylate, methoxypropyl methacrylate, methoxybutyl methacrylate, methoxy-polyethylene glycol (meth)acrylate, and methoxy-polyethylene glycol (meth)acrylate; and the like.

Among these α,β-ethylenically unsaturated monocarboxylic acid ester monomers, from the viewpoint of the capability to make the effects of the present invention further remarkable, the acrylic acid alkyl ester monomers and the acrylic acid alkoxyalkyl ester monomers are preferable, n-butyl acrylate and methoxyethyl acrylate are more preferable, and methoxyethyl acrylate is particularly preferable. Further, these α,β-ethylenically unsaturated monocarboxylic acid ester monomers can also be used in combination of two or more.

The content of the α,β-ethylenically unsaturated monocarboxylic acid ester monomer unit in the nitrile group-containing copolymer rubber according to the present invention is preferably 0 to 60 wt%, more preferably 0 to 50 wt%, still more preferably 0 to 40 wt%, furthermore preferably 8 to 30 wt% based on the total monomer units. By setting the content of the α,β-ethylenically unsaturated monocarboxylic acid ester monomer unit within the above-mentioned range, it is possible to more suitably increase the cold resistance of the obtained cross-linked rubber.

Further, in addition to the acrylonitrile unit (a), the monomer unit (b) of an α,β-ethylenically unsaturated nitrile monomer other than acrylonitrile, and the conjugated diene monomer unit (c), and the carboxyl group-containing monomer unit (d) and the α,β-ethylenically unsaturated monocarboxylic acid ester monomer unit (e) which are contained in accordance with need, the nitrile group-containing copolymer rubber according to the present invention may contain a unit of another monomer copolymerizable with the monomers forming the above units. Examples of such another monomer includes an α,β-ethylenically unsaturated monocarboxylic acid ester monomer other than those mentioned above, ethylene, an α-olefin monomer, an aromatic vinyl monomer, a fluorine-containing vinyl monomer, a copolymerizable antiaging agent, and the like.

The α,β-ethylenically unsaturated monocarboxylic acid ester monomer other than those mentioned above includes (meth)acrylic acid esters each having a cyanoalkyl group having 2 to 12 carbon atoms such as α-cyanoethyl acrylate, α-cyanoethyl methacrylate, and cyanobutyl methacrylate; (meth)acrylic acid esters each having a hydroxyalkyl group having 1 to 12 carbon atoms such as 2-hydroxyethyl acrylate, 2-hydroxypropyl acrylate, and 2-hydroxyethyl methacrylate; (meth)acrylic acid esters each having a fluoroalkyl group having 1 to 12 carbon atoms such as trifluoroethyl acrylate and tetrafluoropropyl methacrylate; and the like.

The α-olefin monomer preferably has 3 to 12 carbon atoms, and includes, for example, propylene, 1-butene, 4-methyl-1-pentene, 1-hexene, 1-octene, and the like.

The aromatic vinyl monomer includes styrene, α-methylstyrene, vinylpyridine, and the like.

The fluorine-containing vinyl monomer includes fluoroethyl vinyl ether, fluoropropyl vinyl ether, o-trifluoromethylstyrene, vinyl pentafluorobenzoate, difluoroethylene, tetrafluoroethylene, and the like.

The copolymerizable antiaging agent include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, 4,4'-di-(α,α-dimethylbenzyl)diphenylamine, and the like.

These copolymerizable other monomers may be used in combination. The content of the other monomer unit is preferably 50 wt% or less, more preferably 40 wt% or less, still more preferably 10 wt% or less, with respect to all the monomer units constituting the nitrile group-containing copolymer rubber.

The iodine value of the nitrile group-containing copolymer rubber according to the present invention is 120 or less, preferably 80 or less, more preferably 50 or less, still more preferably 30 or less, particularly preferably 20 or less, most preferably 12 or less. When the iodine value of the nitrile group-containing copolymer rubber is too high, the heat resistance and ozone resistance of the obtained cross-linked rubber may be reduced.

The polymer Mooney viscosity (ML1+4, 100°C) of the nitrile group-containing copolymer rubber according to the present invention is preferably 10 to 200, more preferably 15 to 150, still more preferably 15 to 100, particularly preferably 30 to 80. By setting the polymer Mooney viscosity of the nitrile group-containing copolymer rubber within the above range, it is possible to further enhance mechanical properties of the obtained cross-linked rubber while keeping the processability of the rubber composition good when it is made into the rubber composition.

The method for producing the nitrile group-containing copolymer rubber according to the present invention is not particularly limited, but it is possible to produce it by copolymerizing the above-mentioned monomers and, if necessary, hydrogenating the carbon-carbon double bonds in the obtained copolymer. The polymerization method is not particularly limited, and a known emulsion polymerization method or solution polymerization method may be used, but the emulsion polymerization method is preferable from the viewpoint of the industrial productivity. At the time of the emulsion polymerization, in addition to an emulsifier, a polymerization initiator, and a molecular weight adjuster, polymerization auxiliary materials usually used can be used.

The emulsifier is not particularly limited, but includes, for example, nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as salts of fatty acids such as myristic acid, palmitic acid, oleic acid, and linolenic acid, alkylbenzene sulfonic acid salts such as sodium dodecylbenzenesulfonate, higher alcohol sulfuric acid ester salts, and alkyl sulfosuccinic acid salts; copolymerizable emulsifiers such as sulfo esters of $\alpha,\beta$-unsaturated carboxylic acids, sulfate esters of $\alpha,\beta$-unsaturated carboxylic acids, and sulfoalkylaryl ethers; and the like. The amount of addition of the emulsifier is preferably 0.1 to 10 parts by weight and more preferably 0.5 to 5 parts by weight with respect to 100 parts by weight of the monomers used for the polymerization.

The polymerization initiator is not particularly limited so long as the polymerization initiator is a radical initiator. The polymerization initiator includes inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, t-butylcumyl peroxide, acetyl peroxide, isobutyryl peroxide, octanoyl peroxide, dibenzoyl peroxide, 3,5,5-trimethylhexanoyl peroxide, and t-butylperoxyisobutyrate; azo compounds such as azobisisobutyronitrile, azobis-2,4-dimethylvaleronitrile, azobiscyclohexanecarbonitrile, and methyl azobisisobutyrate; and the like. These polymerization initiators can be used alone or in combination of two or more. As the polymerization initiator, an inorganic or organic peroxide is preferable. When a peroxide is used as a polymerization initiator, the peroxide can be used in combination with a reducing agent as a redox-type polymerization initiator. The reducing agent is not particularly limited, and examples thereof include compounds which are in a reduced state and contains metal ions such as ferrous sulfate and cuprous naphthenate; sulfinates such as sodium hydroxymethanesulfinate; and sulfites such as sodium sulfite, potassium sulfite, sodium hydrogen sulfite, aldehyde sodium hydrogen sulfite, and potassium sulfite; and the like. The amount of addition of the polymerization initiator is preferably 0.01 to 2 parts by weight with respect to 100 parts by weight of the monomers used for the polymerization.

The molecular weight adjuster is not particularly limited. Examples thereof include mercaptans such as t-dodecyl mercaptan, n-dodecyl mercaptan, and octyl mercaptan; halogenated hydrocarbons such as carbon tetrachloride, methylene chloride, and methylene bromide; $\alpha$-methylstyrene dimer; sulfur-containing compounds such as tetraethylthiuram disulfide, dipentamethylenethiuram disulfide, and diisopropyl xanthogen disulfide, and the like. These may be used alone or two or more types of them may be used in combination.

For the medium of emulsion polymerization, water is usually used. The amount of water is preferably 80 to 500 parts by weight, more preferably 80 to 300 parts by weight with respect to 100 parts by weight of the monomers used for the polymerization.

In the emulsion polymerization, it is possible to further use, if necessary, polymerization auxiliary materials such as a stabilizer, a dispersant, a pH adjuster, a deoxidizer, and a particle size adjuster. When these are used, the types and the amounts used thereof are not particularly limited.

Further, for the obtained copolymer, if necessary, the copolymer may be hydrogenated (hydrogenation reaction). The hydrogenation may be performed on the basis of a known method. The known method includes an oil layer hydrogenation method in which the latex of the copolymer obtained by emulsion polymerization is coagulated, and then the hydrogenation is performed in the oil layer; an aqueous layer hydrogenation method in which the latex of the obtained copolymer is hydrogenated as it is; and the like.

When the hydrogenation is performed by the oil layer hydrogenation method, preferably the latex of the copolymer prepared by the emulsion polymerization is coagulated by salting out or by using an alcohol, and the coagulated product is filtered out and dried, and then, dissolved in an organic solvent. Next, a hydrogenation reaction (the oil layer hydrogenation method) is performed, the obtained hydride is poured into a large amount of water to be coagulated, the coagulated product is filtered out and dried, and thus the nitrile group-containing copolymer rubber according to the present invention can be obtained.

For the coagulation of the latex by salting out, a known coagulant such as sodium chloride, calcium chloride, or aluminum sulfate can be used. Further, instead of the coagulation by salting out, the coagulation may also be performed by using an alcohol such as methanol. The solvent for the oil layer hydrogenation method is not particularly limited so long as the solvent is a liquid organic compound capable of dissolving the copolymer obtained by emulsion polymerization; however, as such a solvent, preferably used are benzene, chlorobenzene, toluene, xylene, hexane, cyclohexane, tetrahydrofuran, methyl ethyl ketone, ethyl acetate, cyclohexanone, and acetone.

As the catalyst of the oil layer hydrogenation method, any known selective hydrogenation catalyst can be used without particular limitation; a palladium-based catalyst and a rhodium-based catalyst are preferable, and a palladium-based catalyst (such as palladium acetate, palladium chloride, and palladium hydroxide) are more preferable. These may be used in combination of two or more; however, in such a case, it is preferable to use a palladium-based catalyst as the main active component. These catalysts are usually used as carried on carriers. The carrier includes silica, silica-alumina, alumina, diatomaceous earth, activated carbon, and the like. The amount of use of the catalyst is preferably 10 to 5000 ppm by weight, more preferably 100 to 3000 ppm by weight with respect to the copolymer.

Alternatively, when the hydrogenation is performed by the aqueous layer hydrogenation method, the hydrogenation reaction is performed by adding water to and diluting, if necessary, the latex of the copolymer prepared by the emulsion polymerization. The aqueous layer hydrogenation method includes an aqueous layer direct hydrogenation method in which the latex is hydrogenated by supplying hydrogen to the reaction system in the presence of a hydrogenation catalyst, and an indirect aqueous layer hydrogenation method in which the latex is hydrogenated by reducing the latex in the presence of an oxidizing agent, a reducing agent, and an activating agent. Of these two methods, the aqueous layer direct hydrogenation method is preferable.

In the aqueous layer direct hydrogenation method, the concentration of the copolymer in the aqueous layer (concentration in the latex state) is preferably 40 wt% or less, in order to prevent aggregation. The hydrogenation catalyst is not particularly limited so long as the catalyst is a compound hardly decomposable by water. Specific examples thereof include palladium salts of carboxylic acids such as formic acid, propionic acid, lauric acid, succinic acid, oleic acid, and phthalic acid; palladium chlorides such as palladium chloride, dichloro(cyclooctadiene)palladium, dichloro(norbornadiene)palladium, and ammonium hexachloropalladate (IV); iodides such as palladium iodide; palladium sulfate-dihydrate, and the like. Among these, the palladium salts of carboxylic acids, dichloro(norbornadiene)palladium, and ammonium hexachloropalladate (IV) are particularly preferable. The amount of use of the hydrogenation catalyst may be appropriately set; however, the amount of use of the hydrogenation catalyst is preferably 5 to 6000 ppm by weight, more preferably 10 to 4000 ppm by weight with respect to the copolymer obtained by polymerization.

In the aqueous layer direct hydrogenation method, after the completion of the hydrogenation reaction, the hydrogenation catalyst in the latex is removed. As the method for removing the hydrogenation catalyst, for example, it is possible to adopt a method in which an adsorbent such as activated carbon or an ion-exchange resin is added to the latex, the hydrogenation catalyst is adsorbed to the adsorbent under stirring, and then the latex is subjected to a filtration or centrifugation. The hydrogenation catalyst may not be removed and may remain in the latex.

Then, in the aqueous layer direct hydrogenation method, nitrile group-containing copolymer rubber according to the present invention can be obtained by performing coagulation with salting out or performing coagulation with an alcohol, filtration and drying, and the like on the latex after the hydrogenation reaction thus obtained. In this case, the steps of filtration and drying following coagulation may be performed by known methods.

<Rubber composition>

The rubber composition according to the present invention contains the above-mentioned nitrile group-containing copolymer rubber according to the present invention and a cross-linking agent.

The cross-linking agent is not particularly limited, but, for example, a sulfur-based cross-linking agent, an organic peroxide cross-linking agent, a polyamine-based cross-linking agent, and the like may be mentioned.

As the sulfur-based cross-linking agent, sulfur such as powdery sulfur, flower of sulfur, precipitated sulfur, colloidal sulfur, surface-treated sulfur, and insoluble sulfur; sulfur-containing compounds such as sulfur chloride, sulfur dichloride, morpholine disulfide, alkylphenol disulfide, dibenzothiazyl disulfide, N,N'-dithio-bis(hexahydro-2H-azepinone-2), phosphorus-containing polysulfide, and polymeric polysulfide; and sulfur-donating compound such as tetramethyl thiuram disulfide, selenium dimethyl dithiocarbamate, and 2-(4'-morpholinodithio)benzothiazole; and the like may be mentioned. These can be used alone or in combination.

As the organic peroxide crosslinking agent, dicumyl peroxide, cumene hydroperoxide, t-butyl cumyl peroxide, para-menthane hydroperoxide, di-t-butyl peroxide, 1,3-bis(t-butylperoxy isopropyl)benzene, 1,4-bis(t-butylperoxy isopropyl)benzene, 1,1-di-t-butylperoxy-3,3-trimethylcyclohexane, 4,4-bis-(t-butyl-peroxy)-n-butyl valerate, 2,5-dimethyl-2,5-di-t-butylperoxyhexane, 2,5-dimethyl-2,5-dit-butylperoxyhexyne-3, 1,1-di-t-butylperoxy-3,5,5-trimethylcyclohexane, p-chlorobenzoyl peroxide, t-butylperoxyisopropyl carbonate, t-butylperoxy benzoate, and the like may be mentioned. These can be used alone or in combination.

The polyamine-based cross-linking agent is not particularly limited so long as the polyamine-based cross-linking agent is a compound having two or more amino groups or a compound that becomes a form having two or more amino groups as a result of cross-linking, but the polyamine-based cross-linking agent is preferably a compound comprised of an aliphatic hydrocarbon or an aromatic hydrocarbon in which a plurality of hydrogen atoms are substituted with amino groups or hydrazide structures (structures each represented by -CONHNH$_2$, where CO represents a carbonyl group) or a compound that becomes the aforementioned compound form as a result of cross-linking.

As specific examples of the polyamine-based cross-linking agent, aliphatic polyvalent amines such as hexamethylenediamine, hexamethylenediamine carbamate, N,N-dicinnamylidene-1,6-hexanediamine, tetramethylenepentamine, and hexamethylenediamine cinnamaldehyde adduct; aromatic polyvalent amines such as 4,4-methylenedianiline, m-phenylenediamine, 4,4-diaminodiphenyl ether, 3,4-diaminodiphenyl ether, 4,4-(m-phenylenediisopropylidene)dianiline, 4,4-(p-phenylenediisopropylidene)dianiline, 2,2-bis[4-(4-aminophenoxy)phenyl]propane, 4,4-diaminobenzanilide, 4,4-bis(4-aminophenoxy)biphenyl, m-xylylenediamine, p-xylylenediamine, and 1,3,5-benzenetriamine; and polyvalent hydrazides such as isophthalic acid dihydrazide, terephthalic acid dihydrazide, phthalic acid dihydrazide, 2,6-naphthalene dicarboxylic acid dihydrazide, naphthalenic acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azelaic acid dihydrazide, sebacic acid dihydrazide, brassylic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide, 1,3,5-benzene tricarboxylic acid dihydrazide, aconitic acid dihydrazide, and pyromellitic acid dihydrazide; and the like may be mentioned. Among these, from the viewpoint of the capability to make the effects of the present invention more remarkable, aliphatic polyvalent amines and the aromatic polyvalent amines are preferable, hexamethylenediamine carbamate and 2,2-bis[4-(4-aminophenoxy)phenyl]propane are more preferable, and hexamethylenediamine carbamate is particularly preferable.

The content of the cross-linking agent in the rubber composition according to the present invention is not particularly limited, but is preferably 0.1 to 20 parts by weight, more preferably 0.2 to 15 parts by weight, and still more preferably 0.5 to 10 parts by weight, with respect to 100 parts by weight of the nitrile group-containing copolymer rubber. By setting the content of the cross-linking agent within the above-mentioned range, it is possible to make the mechanical properties of the obtained cross-linked rubber better.

Further, the rubber composition according to the present invention preferably contains a filler from the viewpoint that the mechanical properties of the obtained cross-linked rubber can be further enhanced. The filler is not particularly limited so long as the filler is any filler usually used in the field of rubber, and any of an organic filler and an inorganic filler can be used, but from the viewpoint of increasing the effect of its addition, the inorganic filler is preferable.

The inorganic filler may be any inorganic filler usually used for compounding in rubber, and, for example, carbon black, silica, clay, alumina, aluminum hydroxide, magnesium oxide, magnesium hydroxide, calcium oxide, calcium hydroxide, magnesium aluminum oxide, titanium oxide, kaolin, pyrophyllite, bentonite, talc, attapulgite, calcium magnesium silicate, aluminum silicate, magnesium silicate, calcium silicate, crystalline aluminosilicate, etc. may be mentioned. Among these, carbon black, silica, and clay are preferably used, silica and clay are more preferable from the viewpoint that the obtained cross-linked rubber can be made more excellent in oil resistance and resistance to hardening in oil under a heated environment, and silica is particularly preferred. The inorganic fillers can be used alone or in combination.

Carbon black may be any carbon black usually used for compounding in rubber, and, for example, furnace black, acetylene black, thermal black, channel black, graphite, etc. may be mentioned.

As silica, it is not particularly limited, but natural silica such as quartz powder and silica stone powder; synthetic silica such as silicic anhydride (such as silica gel and aerosil) and hydrous silicic acid; and the like may be mentioned, and among these, synthetic silica is preferable.

Clay is not particularly limited so long as the clay is a natural mineral comprising hydrous aluminum silicate as the main component, but montmorillonite, pyrophyllite, kaolinite, halloysite, sericite, etc. may be mentioned.

As the inorganic filler, the inorganic filler obtained through coupling treatment with a silane coupling agent, aluminum coupling agent, titanium coupling agent and the like, or surface-modifying treatment with a higher fatty acid or a metal salt thereof, a derivative of the higher fatty acid such as an ester and an amide thereof, a surfactant, and the like may be used. At this time, as the inorganic filler, one that has been subjected to surface-modifying treatment in advance may be used, or when preparing the rubber composition, the surface-modifying treatment of the inorganic filler may be performed by blending a surface modifier such as a coupling treatment agent together with the inorganic filler.

The silane coupling agent is not particularly limited. Examples thereof include sulfur-containing silane coupling agents, such as γ-mercaptopropyltrimethoxysilane, mercaptomethyltrimethoxysilane, mercaptomethyltriethoxysilane, bis(3-triethoxysilylpropyl)tetrasulfane, bis(3-triethoxysilylpropyl)disulfane; epoxy group-containing silane coupling agents, such as γ-glycidoxypropyltrimethoxysilane, γ-glycidoxypropylmethyldimethoxysilane, β-(3,4-epoxycyclohexyl)ethyltrimethoxysilane, γ-mercaptopropyltrimethoxysilane, γ-glycidoxypropylmethyldiethoxysilane; amino group-containing silane coupling agents, such as N-(β-aminoethyl)-γ-aminopropyltrimethoxysilane, γ-aminopropyltrimethoxysilane, γ-aminopropyltriethoxysilane, N-2-(aminoethyl)-3-aminopropyltrimethoxysilane, N-2-(aminoethyl)-3-aminopropyltriethoxysilane, 3-triethoxysilyl-N-(1,3-dimethylbutylidene)propylamine, N-phenyl-3-aminopropyltrimethoxysilane; (meth)acryloxy group-containing silane coupling agents, such as γ-methacryloxypropyltrimethoxysilane, γ-methacryloxyloxypropyltris(β-methoxyethoxy)silane, γ-methacryloxypropylmethyldimethoxysilane, γ-methacryloxypropylmethyldiethoxysilane, γ-methacryloxypropyltriethoxysilane, γ-acryloxypropyltrimethoxysilane; vinyl group-containing silane coupling agents, such as vinyltrimethoxysilane, vinyltriethoxysilane, vinyltris(β-methoxyethoxy)silane, vinyltrichlorosilane, vinyltriacetoxysilane; chloropropyl group-containing silane coupling agents, such as 3-chloropropyltrimethoxysilane; isocyanate group-containing silane coupling agents, such as 3-isocyanate propyltriethoxysilane; styryl group-containing silane coupling agents, such as p-styryltrimethoxysilane; ureido group-containing silane coupling agents, such as 3-ureidopropyltriethoxysilane; allyl group-containing silane coupling agents, such as diallyldimethylsilane; alkoxy group-containing silane coupling agents, such as tetraethoxysilane; phenyl group-containing silane coupling agents, such as diphenyldimethoxysilane; fluoro group-containing silane coupling agents, such as trifluoropropyltrimethoxysilane; alkyl group-containing silane coupling agents, such as isobutyltrimethoxysilane, cyclohexylmethyldimethoxysilane; and the like.

Examples of the aluminum-based coupling agents include acetoalkoxyaluminum diisopropylate, aluminum diisopropoxymonoethylacetoacetate, aluminum trisethylacetoacetate, aluminum trisacetylacetonate, and the like.

Examples of the titanate-based coupling agents include isopropyltriisostearoiltitanate, isopropyltris(dioctylpyrophosphate)titanate, isopropyltri(N-aminoethyl-aminoethyl)titanate, tetraoctylbis(ditridecylphosphite)titanate, tetra(2,2-diallyloxymethyl-1-butyl)bis(ditridecyl)phosphitetitanate, bis(dioctylpyrophosphate)oxyacetatetitanate, bis(dioctylpyrophosphate)ethylenetitanate, tetraisopropylbis(dioctylphosphite)titanate, isopropyltriisostearoiltitanate, and the like.

These may be used alone or in combination.

The content of the inorganic filler in the rubber composition according to the present invention is not particularly limited, but is preferably 1 to 200 parts by weight, more preferably 5 to 150 parts by weight, more preferably 10 to 100 parts by weight, particularly preferably 20 to 50 parts by weight, with respect to 100 parts by weight of the nitrile group-containing copolymer rubber. By setting the content of the inorganic filler within the above range, the obtained cross-linked rubber can be made more excellent in resistance to hardening in oil under a heated environment.

Further, the rubber composition according to the present invention may include, in addition to the above components, compounding agents usually used in the field of rubber such as a metal oxide such as zinc oxide or magnesium oxide, an $\alpha,\beta$-ethylenically unsaturated carboxylic acid metal salt such as zinc methacrylate or zinc acrylate, a plasticizer, a co-cross-linking agent, a cross-linking aid, a cross-linking retarder, an antiaging agent, an antioxidant, a light stabilizer, a scorch retarder such as a primary amine, an activating agent such as diethylene glycol, a processing aid, a slip agent, an adhesive, a lubricant, a flame retardant, an antifungal agent, an acid acceptor, an antistatic agent, a pigment, and a foaming agent. The amounts of these compounding agents are not particularly limited and the compounding agents can be compounded in the amounts according to the compounding purposes so long as the compounding amounts are within ranges not impairing the object and the effects of the present invention.

Furthermore, the rubber composition according to the present invention may contain rubber other than the above-mentioned nitrile group-containing copolymer rubber according to the present invention in a range where the effects of the present invention are not obstructed. Such rubber other than the nitrile group-containing copolymer rubber according to the present invention includes acrylic rubber, ethylene-acrylic acid copolymer rubber, fluororubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluorosilicone rubber, chlorosulfonated polyethylene rubber, natural rubber, polyisoprene rubber, and the like. When rubber other than the nitrile group-containing copolymer rubber according to the present invention is mixed, the amount is preferably 30 parts by weight or less, more preferably 20 parts by weight or less, still more preferably 10 parts by weight or less, with respect to 100 parts by weight of the nitrile group-containing copolymer rubber according to the present invention.

The rubber composition according to the present invention is prepared by mixing the above ingredients preferably in a nonaqueous system. The method of preparation of the rubber composition according to the present invention is not particularly limited, but usually it can be prepared by kneading the ingredients other than the cross-linking agent and ingredients unstable against heat (co-cross-linking agents and the like) by a mixing machine such as a Banbury mixer, an internal mixer, or a kneader for primary kneading, then transferring the mixture to open rolls and the like and adding the cross-linking agent and ingredients unstable against heat and the like for secondary kneading.

<Cross-linked rubber>

The cross-linked rubber according to the present invention is obtained by cross-linking the above cross-linkable nitrile rubber composition according to the present invention.

The cross-linked rubber according to the present invention can be produced as follows: the cross-linkable nitrile rubber composition according to the present invention is used, the composition is formed by using a forming machine corresponding to the desired shape, such as an extruder, an injection molding machine, a compressor, or a roll, the cross-linking reaction is performed by heating the formed product, and thus the shape of the formed product is fixed to produce the cross-linked rubber. In this case, the cross-linking may be performed after preliminarily performing the forming, or alternatively, the forming and the cross-linking may also be performed simultaneously. The forming temperature is usually 10 to 200°C, preferably 25 to 120°C. The cross-linking temperature is usually 100 to 200°C and preferably 130 to 190°C, and the cross-linking time is usually 1 minute to 24 hours and preferably 2 minutes to 1 hour.

Further, depending on the shape, size, and the like of the cross-linked product, sometimes, even if the surface is cross-linked, the inside part is not sufficiently cross-linked, so it is possible to further heat the rubber for secondary cross-linking.

As the heating method, a general method which is used for cross-linking rubber such as press heating, steam heating, oven heating, and hot air heating may be suitably selected.

The cross-linked rubber according to the present invention obtained by using the rubber composition according to the present invention mentioned above has good normal physical properties, and is excellent in heat resistance, oil resistance, and resistance to hardening in oil under a heated environment (specifically, is small in change in glass transition temperature and change in hardness when immersed in an oil containing a polycyclic condensed aromatic compound after being stored in a heated environment). In particular, according to the present invention, for resistance to hardening in oil under a heated environment, an occurrence of hardening in oil is effectively prevented even when the cross-linked rubber is immersed in an oil containing a polycyclic condensed aromatic compound, in which hardening in oil tends to occur relatively often.

Therefore, the cross-linked rubber according to the present invention, taking advantage of such a characteristic, can be used for various seal members such as O-rings, packings, diaphragms, oil seals, shaft seals, bearing seals, well head seals, shock absorber seals, air compressor seals, seals for sealing in Freon or fluorohydrocarbons or carbon dioxide which is used for compressors for cooling devices for air-conditioners or refrigerating machines of air-conditioning systems, seals for sealing in supercritical carbon dioxide or subcritical carbon dioxide which is used for the washing media in precision washing, seals for roller devices (roller bearings, automotive hub units, automotive water pumps, linear guide devices and ball screws, and the like), valves and valve seats, BOP (blow out preventer), and platters; various types of gaskets such as intake manifold gaskets which are attached at connecting parts of intake manifolds and cylinder heads, cylinder head gaskets which are attached at connecting parts of cylinder blocks and cylinder heads, rocker cover gaskets which are attached at connecting parts of rocker covers and cylinder heads, oil pan gaskets which are attached at connecting parts of oil pans and cylinder blocks or transmission cases, fuel cell separator gaskets which are attached between pairs of housings straddling unit cells provided with positive electrodes, electrolyte plates, and negative electrodes, and top cover gaskets for hard disk drives; various types of rolls such as printing rolls, ironmaking rolls, papermaking rolls, industrial rolls, and office equipment rolls; various types of belts such as flat belts (film core flat belts, cord flat belts, laminated flat belts, single type flat belts, and the like), V-belts (wrapped V-belts, low edge V-belts, and the like), V-ribbed belts (single V-ribbed belts, double V-ribbed belts, wrapped V-ribbed belt, rubber-backed V-ribbed belts, top cog V-ribbed belts, and the like), CVT use belts, timing belts, toothed belts, and conveyor belts; various types of hoses such as fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, and flow lines; various types of boots such as CVJ boots, propeller shaft boots, constant velocity joint boots, and rack and pinion boots; attenuating member rubber parts such as cushion materials, dynamic dampers, rubber couplings, air springs, shock absorbers, and clutch facing materials; dust covers, automotive interior members, friction materials, tires, covered cables, shoe soles, electromagnetic wave shields, binders for flexible printed circuit boards or other binders, fuel cell separators and also other broad applications in the electronics field. In particular, since the cross-linked rubber according to the present invention is excellent in resistance to hardening in oil under a heated environment (specifically, is small in change in glass transition temperature and change in hardness when immersed in an oil containing a polycyclic condensed aromatic compound after being stored in a heated environment), it can be particularly suitably used for applications in which the cross-linked rubber is used in contact with a fuel oil containing a polycyclic aromatic compound under high temperature environment.

EXAMPLES

Hereinafter, the present invention will be described more specifically by way of Examples and Comparative Examples, but the present invention is not limited to these Examples. In what follows, unless otherwise specified, "parts" are parts by weight. The methods of testing or evaluating the physical properties and the characteristics are as follows.

<Rubber composition>

The contents of the respective monomer units constituting a nitrile group-containing copolymer rubber were measured by the following method.

Specifically, the content of the methacrylic acid unit was calculated as follows. To 0.2 g of a 2 mm square piece of the nitrile group-containing copolymer rubber, 100 mL of 2-butanone was added. The mixture was stirred for 16 hours, and then 20 mL of ethanol and 10 mL of water were added to the mixture. While stirring, a titration was performed at room temperature by using a 0.02 N hydrous ethanol solution of potassium hydroxide, and thymolphthalein as an indicator, and thus the number of moles of carboxyl groups with respect to 100 g of the nitrile group-containing copolymer rubber was determined. Then, the determined number of moles was converted into the content of the methacrylic acid unit.

The content of the 1,3-butadiene unit and the content of the saturated butadiene unit were calculated by measuring the iodine values before and after hydrogenation (in accordance with JIS K 6235:2006) using the nitrile group-containing copolymer rubber.

The content of the methacrylonitrile unit and the acrylonitrile unit were calculated by measuring the nitrogen content in the nitrile group-containing copolymer rubber using the Dumas method according to JIS K6451-1:2016 and identifying the methacrylonitrile unit and the acrylonitrile unit by pyrolysis gas chromatography.

The content of the 2-methoxyethyl acrylate unit was determined by calculation from the contents of the methacrylic acid unit, the 1,3-butadiene unit, the saturated butadiene unit, the methacrylonitrile unit, and the acrylonitrile unit each determined as described above.

<Iodine value>

The iodine value of the nitrile group-containing copolymer rubber was measured according to JIS K 6235:2006.

<Mooney viscosity (polymer Mooney)>

The Mooney viscosity of the nitrile group-containing copolymer rubber (polymer Mooney) was measured according to JIS K6300:2013 (unit is [ML1+4, 100°C]).

<Normal physical properties (tensile strength, elongation, and hardness)>

A rubber composition was placed in a mold of 15 cm in length, 15 cm in width, and 0.2 cm in depth, and was press-formed at 170°C for 20 minutes while being pressurized at a press pressure of 10 MPa, and thus a sheet-shaped cross-linked rubber was obtained. Then, the obtained cross-linked rubber was transferred to a geer oven and subjected to a secondary cross-linking at 170°C for 4 hours to obtain a sheet-shaped cross-linked rubber, and the obtained sheet-shaped cross-linked rubber was punched with a JIS No. 3 dumbbell to prepare a test piece. Then, by using the obtained test piece, the tensile strength and the elongation at break of the cross-linked rubber were measured in accordance with JIS K6251:2017, and, further, the hardness of the cross-linked rubber was measured by using a durometer hardness tester (type A) in accordance with JIS K6253:2012.

<Heat resistance test>

Using a sheet-shaped cross-linked rubber obtained in the same manner as in the evaluation of the above normal physical properties, a heat resistance test was performed according to JIS K6257:2017. Specifically, after the obtained sheet-shaped cross-linked rubber was held in a geer oven at a temperature of 150°C for 504 hours, the tensile strength and the elongation at break were measured in the same manner as the above-mentioned normal physical properties, and the change rate in tensile strength and elongation after the heat resistance test were obtained. It can be judged that a larger value of the change rate in tensile strength and a larger elongation after the heat resistance test indicate more excellent heat resistance. The change rate in tensile strength was calculated according to the following formula.

```
Change rate in tensile strength (%) = {("tensile strength after
heat resistance test" - "tensile strength before heat resistance test")
/ "tensile strength before heat resistance test"} × 100
```

<Oil resistance test (IRM903)>

Using a sheet-shaped cross-linked rubber obtained in the same manner as in the evaluation of the above normal physical properties, according to JIS K6258:2016, an oil resistance test was performed by immersing the obtained sheet-shaped cross-linked rubber in a test lubricating oil No. 3 oil (trade name "IRM903", manufactured by Japan Sun Oil Co., Ltd.) at a temperature of 150°C for 504 hours. Then, the volume of the cross-linked rubber before and after immersion in the test lubricating oil was measured, the volume change rate after the oil resistance test was calculated, and the elongation at break was measured in the same manner as the above-mentioned normal physical properties to determine the elongation after the oil resistance test. It can be judged that a smaller volume change rate after the oil resistance test and a larger elongation after the oil resistance test indicate more excellent oil resistance. The volume change rate after the oil resistance test was calculated according to the following formula.

$$\text{Volume change rate after oil resistance test (\%)} = \{(\text{"volume after oil resistance test"} - \text{"volume before oil resistance test"}) / \text{"volume before oil resistance test"}\} \times 100$$

<Fuel oil resistance test>

Using a sheet-shaped cross-linked rubber obtained in the same manner as in the evaluation of the above normal physical properties, a fuel oil resistance test was performed by immersing the obtained sheet-shaped cross-linked rubber in a test fuel oil (Fuel B : ethanol = 74:26 (volume ratio) (Fuel B is a mixture of isooctane : toluene = 70:30 (volume ratio)) which was adjusted to 150°C for 168 hours according to JIS K6258:2016. Then, using the cross-linked rubber which had been subjected to the fuel oil resistance test, the tensile strength and the elongation at break were measured in the same manner as the above-mentioned normal physical properties to determine the change rate in tensile strength and elongation after the fuel oil resistance test. It can be determined that a larger value of the change rate in tensile strength and a larger elongation after the fuel oil resistance test indicate more excellent oil resistance (fuel oil resistance). The change rate in the tensile strength was calculated according to the following formula.

$$\text{Change rate in tensile strength (\%)} = \{(\text{"tensile strength after fuel oil resistance test"} - \text{"tensile strength before fuel oil resistance test"}) / \text{"tensile strength before fuel oil resistance test"}\} \times 100$$

<Test of resistance to hardening in oil under heated environment (change in glass transition temperature and change in hardness after immersion in fuel oil containing polycyclic condensed aromatic compound)>

A phenanthrene-containing test fuel oil was prepared by dissolving 10 wt% of phenanthrene in a mixed liquid of Fuel C (a mixture of isooctane : toluene = 50:50 (volume ratio)) and ethanol (Fuel C : ethanol = 80:20 (volume ratio)). Also, using a sheet-shaped cross-linked rubber obtained in the same manner as in the evaluation of the above normal physical properties, measurement of the glass transition temperature was performed. The glass transition temperature was measured by using a heat flux type differential scanning calorimeter (device: manufactured by SII Nanotechnology Inc., X-DSC7000) according to JIS K7121:2012 at a heating rate of 20°C/min. Then, the sheet-shaped cross-linked rubber was heated by holding it in a geer oven at a temperature of 150°C for 504 hours in accordance with JIS K6257:2017, and then the cross-linked rubber after heating was immersed in the phenanthrene-containing test fuel oil prepared above at 60°C for 70 hours. Then, the cross-linked rubber was taken out from the phenanthrene-containing test fuel oil, dried at 120°C for 3 hours, and allowed to stand at room temperature for 24 hours. Then, the glass transition temperature was measured in the same manner as described above, and the hardness was measured in the same manner as the above normal physical properties, and the change in glass transition temperature and the change in hardness were determined in accordance with the following formulas, respectively. It can be judged that a smaller change in the glass transition temperature and a smaller change in hardness indicate more excellent resistance to hardening in oil under a heated environment.

Change in glass transition temperature (°C) = "glass transition temperature after test of resistance to hardening in oil" - "glass transition temperature before test of resistance to hardening in oil"

Change in hardness = "hardness after test of resistance to hardening in oil" - "hardness before test of resistance to hardening in oil"

<Example 1>

In a metallic bottle, 180 parts of ion exchanged water, 25 parts of an aqueous solution of sodium dodecylbenzenesulfonate having a concentration of 10 wt%, 7 parts of methacrylonitrile, 21 parts of acrylonitrile, 30 parts of 2-methoxyethyl acrylate, 2 parts of methacrylic acid, and 0.5 parts of t-dodecyl mercaptan (molecular weight adjuster) were added in the mentioned order, the gas inside the metallic bottle was replaced with nitrogen three times, and then 40 parts of 1,3-butadiene was placed in the metallic bottle. The metallic bottle was held at 5°C, 0.1 parts of cumene hydroperoxide (polymerization initiator), and appropriate amounts of a reducing agent and a chelating agent were placed in the metallic bottle, and the polymerization reaction was performed for 16 hours while the metallic bottle was being rotated. After 0.1 parts of an aqueous solution of hydroquinone (polymerization terminator) having a concentration of 1 wt% was added to terminate the polymerization reaction, the residual monomers were removed by using a rotary evaporator at a water temperature of 60°C, to obtain a latex of a copolymer rubber (solid content concentration of about 30 wt%).

Then, in an autoclave, the latex of the copolymer rubber obtained as described above and a palladium catalyst (a solution prepared by mixing a 1 wt% palladium chloride aqueous solution and an equal weight of ion exchanged water) were added in such a way that the content of palladium was 3,500 ppm by weight with respect to the dry weight of the copolymer rubber contained in the latex of the copolymer rubber, then, a hydrogenation reaction was performed at a hydrogen pressure of 3.0 MPa and a temperature of 50°C for 7 hours to obtain a latex of a nitrile group-containing copolymer rubber (A-1).

Next, to the obtained latex, a two-fold volume of methanol was added to coagulate the latex, and then the resulting mixture was vacuum dried at 60°C for 12 hours to thereby obtain the nitrile group-containing copolymer rubber (A-1). Regarding the proportions of the respective monomer units, the obtained nitrile group-containing copolymer rubber (A-1) included 8 wt% of methacrylonitrile unit, 21 wt% of acrylonitrile unit, 22 wt% of 2-methoxyethyl acrylate unit, 2.1 wt% of methacrylic acid unit, and 46.9 wt% of 1,3-butadiene unit (including hydrogenated moieties). Further, the obtained nitrile group-containing highly rubber (A-1) had an iodine value of 8, and a polymer Mooney viscosity [ML1+4, 100°C] of 60.

Then, to 100 parts of the obtained nitrile group-containing copolymer rubber (A-1), 30 parts of silica (trade name "Carplex 1120", manufactured by Evonik Industries), 5 parts of tris(2-ethylhexyl) trimellitate (trade name "ADK CIZER C-8", manufactured by ADEKA Corporation, plasticizer), 1 part of polyoxyethylene alkyl ether phosphate ester (trade name "Phosphanol RL210", manufactured by Toho Chemical Industry Co., Ltd., emulsifier), 1 part of Stearic Acid, 1.5 parts of 4,4'-di-($\alpha,\alpha$-dimethylbenzyl) diphenylamine (trade name "Nocrac CD", manufactured by Ouchi Shinko Chemical Industry Co., Ltd., antiaging agent), 1.5 parts of the zinc salt of 2-mercaptobenzimidazole (trade name "Nocrac MBZ", manufactured by Ouchi Shinko Chemical Industry Co., Ltd., antiaging agent), 1.5 parts of a silane coupling agent (trade name "Silanogran HVS", manufactured by Kettlitz-Chemie GmbH), and 7 parts of zinc diacrylate (trade name "Dymalink 633", manufactured by Cray Valley) were blended and mixed for 5 minutes at 50°C. Then, the obtained mixture was transferred to a roll of 50°C, and 10 parts of 1,3-bis(t-butylperoxyisopropyl)benzene (trade name "Vulcup 40KE", manufactured by Hercules, organic peroxide cross-linking agent, 40% product) was blended and the rubber composition was obtained.

Then, using the obtained rubber composition, the measurement of normal physical properties (tensile strength, elongation, hardness), the heat resistance test, the oil resistance test (IRM903), the fuel oil resistance test, and the test of resistance to hardening in oil under a heated environment were performed according to the above methods. The results were shown in Table 1.

<Examples 2 to 4>

Except that the amounts of methacrylonitrile, acrylonitrile, 2-methoxyethyl acrylate, methacrylic acid, and 1,3-butadiene were changed as shown in Table 1, nitrile group-containing copolymer rubbers (A-2), (A-3), and (A-4) were obtained as in Example 1, and rubber compositions were prepared in the same manner and evaluated in the same manner. The results were shown in Table 1. The monomer composition, iodine value, and polymer Mooney viscosity [ML1+4, 100°C] of each of the nitrile group-containing copolymer rubbers (A-2), (A-3), and (A-4) are as shown in Table 1.

<Examples 5 to 7>

Except that the amounts of methacrylonitrile, acrylonitrile, methacrylic acid, and 1,3-butadiene were changed as shown in Table 1, and 2-methoxyethyl acrylate was not used, nitrile group-containing copolymer rubbers (A-5), (A-6), and (A-7) were obtained as in Example 1, and rubber compositions were prepared in the same manner and evaluated in the same manner. The results were shown in Table 1. The monomer composition, iodine value and polymer Mooney viscosity [ML1+4, 100°C] of each of the nitrile group-containing copolymer rubbers (A-5), (A-6), and (A-7) are as shown in Table 1.

<Example 8>

Except that the amounts of methacrylonitrile, acrylonitrile, and 1,3-butadiene were changed as shown in Table 1, and methacrylic acid and 2-methoxyethyl acrylate were not used, a nitrile group-containing copolymer rubber (A-8) was obtained as in Example 1, and a rubber composition was prepared in the same manner and evaluated in the same manner. The results were shown in Table 1. The monomer composition, iodine value and polymer Mooney viscosity [ML1+4, 100°C] of the nitrile group-containing copolymer rubber (A-8) are as shown in Table 1.

<Comparative Example 1>

Except that the amounts of methacrylonitrile, 2-methoxyethyl acrylate, methacrylic acid, and 1,3-butadiene were changed as shown in Table 1, and acrylonitrile was not used, a nitrile group-containing copolymer rubber (A'-9) was obtained as in Example 1, and a rubber composition was prepared in the same manner and evaluated in the same manner. The results were shown in Table 1. The monomer composition, iodine value, and polymer Mooney viscosity [ML1+4, 100°C] of the nitrile group-containing copolymer rubber (A'-9) are as shown in Table 1.

<Comparative Example 2>

Except that the amounts of acrylonitrile, 2-methoxyethyl acrylate, methacrylic acid, and 1,3-butadiene were changed as shown in Table 1, and methacrylonitrile was not used, a nitrile group-containing copolymer rubber (A'-10) was obtained as in Example 1, and a rubber composition was prepared in the same manner and evaluated in the same manner. The results were shown in Table 1. The monomer composition, iodine value, and polymer Mooney viscosity [ML1+4, 100°C] of the nitrile group-containing copolymer rubber (A'-10) are as shown in Table 1.

<Comparative Examples 3, 4>

Except that the amounts of methacrylonitrile, acrylonitrile, 2-methoxyethyl acrylate, methacrylic acid, and 1,3-butadiene were changed as shown in Table 1, nitrile group-containing copolymer rubbers (A'-11) and (A'-12) were obtained as in Example 1, and rubber compositions were prepared in the same manner and evaluated in the same manner. The results were shown in Table 1. The monomer composition, iodine value, and polymer Mooney viscosity [ML1+4, 100°C] of each of the nitrile group-containing copolymer rubbers (A'-11) and (A'-12) are as shown in Table 1.

<Comparative Example 5>

Except that the amounts of acrylonitrile and 1,3-butadiene were changed as shown in Table 1, and 2-methoxyethyl acrylate, methacrylonitrile, and methacrylic acid were not used, a nitrile group-containing copolymer rubber (A'-13) was obtained as in Example 1, and a rubber composition was prepared in the same manner and evaluated in the same manner. The results were shown in Table 1. The monomer composition, iodine value, and polymer Mooney viscosity [ML1+4, 100°C] of the nitrile group-containing copolymer rubber (A'-13) are as shown in Table 1.

[Table 1]

Table 1

| | | | Example | | | | | | | | Comparative Example | | | | |
|---|---|---|---|---|---|---|---|---|---|---|---|---|---|---|---|
| | | | 1 | 2 | 3 | 4 | 6 | 5 | 7 | 8 | 1 | 2 | 3 | 4 | 5 |
| Monomers used for polym eization | | | | | | | | | | | | | | | |
| | Methacrylonitrile | (Parts) | 7 | 14 | 21 | 16 | 12 | 18 | 23 | 18 | 28 | 0 | 26.6 | 1.4 | 0 |
| | Acrylonitrile | (Parts) | 21 | 14 | 7 | 16 | 23 | 18 | 12 | 18 | 0 | 28 | 1.4 | 26.6 | 36 |
| | 2-Methoxyethyl acrylate | (Parts) | 30 | 30 | 30 | 15 | 0 | 0 | 0 | 0 | 30 | 30 | 30 | 30 | 0 |
| | 1,3-Butadiene | (Parts) | 40 | 40 | 40 | 51.5 | 63.5 | 62.5 | 63.5 | 64 | 40 | 40 | 40 | 40 | 64 |
| | Methacrylic acid | (Parts) | 2 | 2 | 2 | 1.5 | 1.5 | 15 | 1.5 | 0 | 2 | 2 | 2 | 2 | 0 |
| Monomer composition of nitrile group-containing copolymer rubber | | | | | | | | | | | | | | | |
| | Methacrylonitrile unit | (wt%) | 8 | 15 | 22.5 | 18 | 13 | 19 | 24 | 20 | 30 | 0 | 28 | 1.7 | 0 |
| | Acrylonitrile unit | (wt%) | 21 | 14 | 7 | 17 | 23 | 18 | 12 | 18 | 0 | 29 | 1.5 | 27.8 | 36 |
| | 2-Methoxyethyl acrylate unit | (wt%) | 22 | 22 | 22 | 13 | 0 | 0 | 0 | 0 | 22 | 22 | 22.5 | 22.5 | 0 |
| | 1,3-Butadiene unit (including hydrogenated moieties) | (wt%) | 46.9 | 46.9 | 46.4 | 50.4 | 62.4 | 61.4 | 62.4 | 62 | 45.9 | 46.9 | 45.9 | 46.9 | 64 |
| | Methacrylic acid unit | (wt%) | 2.1 | 2.1 | 2.1 | 1.6 | 16 | 16 | 16 | 0 | 21 | 21 | 2.1 | 2.1 | 0 |
| Iodine value of nitrile group-containing copolymer rubber | | | 8 | 8 | 8 | 8 | 8 | 8 | 8 | 8 | 8 | 8 | 8 | 8 | 8 |
| Mooney viscosity of nitrile group-containing copolymer rubber | | | 60 | 50 | 40 | 60 | 70 | 65 | 70 | 70 | 50 | 50 | 50 | 50 | 80 |
| Normal physical properties | | | | | | | | | | | | | | | |
| | Tensile strength | (MPa) | 15 | 15 | 12.8 | 16.5 | 18.9 | 20.8 | 20.6 | 23.2 | 9.5 | 16 | 10.3 | 17.2 | 22.9 |
| | Elongation | (%) | 340 | 390 | 380 | 340 | 360 | 340 | 350 | 350 | 370 | 340 | 370 | 330 | 340 |
| | Hardness | | 66 | 65 | 64 | 66 | 67 | 68 | 67 | 69 | 62 | 66 | 62 | 66 | 70 |
| Heat resistance test (150°C, 504 hours) | | | | | | | | | | | | | | | |
| | Change rate in tensile strength | (%) | -7 | -15 | -2 | -6 | -3 | -2 | -6 | -4 | 21 | -9 | 20 | -10 | -3 |
| | Elongation after heat resistance test | (%) | 150 | 160 | 180 | 190 | 220 | 230 | 230 | 220 | 190 | 160 | 200 | 170 | 240 |

(continued)

| Oil resistance test (IRM903) | | | | | | | | | | | | | | | |
|---|---|---|---|---|---|---|---|---|---|---|---|---|---|---|---|
| Volume change rate | (%) | 9 | 12 | 14 | 15 | 13 | 17 | 16 | 17 | 19 | 7 | 19 | 7 | 7 |
| Elongation after oil resistance test | (%) | 240 | 260 | 240 | 270 | 270 | 270 | 250 | 270 | 230 | 240 | 230 | 220 | 240 |
| Fuel oil resistance test | | | | | | | | | | | | | | | |
| Change rate in tensile strength | (%) | 9 | 5 | 12 | 12 | 13 | 16 | 17 | 13 | 14 | 8 | 15 | 8 | 8 |
| Elongation after fuel oil resistance test | (%) | 230 | 260 | 300 | 300 | 290 | 310 | 300 | 270 | 320 | 240 | 300 | 250 | 280 |
| Test of resistance to hardening in oil under heated environment (using polycyclic condensed aromatic compound) | | | | | | | | | | | | | | | |
| Change rate in glass transition temperature | (°C) | 7.4 | 4.7 | 3.4 | 6.7 | 5.5 | 3.1 | 2.2 | 3.1 | 0.8 | 11.2 | 1.2 | 11.2 | 12.0 |
| Change in hardness | | 1.8 | 0.4 | 1.3 | -2.2 | 1.2 | -2.3 | 0.6 | -1.8 | 3.0 | 20.0 | 1.8 | 20.0 | 22.0 |

As shown in Table 1, according to the nitrile group-containing copolymer rubbers comprising an acrylontrile unit (a), a monomer unit (b) of an $\alpha, \beta$-ethylenically unsaturated nitrile monomer other than acrylonitrile, and a conjugated diene monomer unit (c) and having an iodine value of 120 or less and having a content ratio of the acrylonitrile unit (a) and the monomer unit (b) of an $\alpha, \beta$-ethylenically unsaturated nitrile monomer other than acrylonitrile in a specific range, the cross-linked rubbers obtained using the same had good normal physical properties and excellent heat resistance, and exhibited excellent oil resistance in both cases when the test lubricating oil

Table 1

| | | Example | | | | | | | | Comparative Example | | | | |
|---|---|---|---|---|---|---|---|---|---|---|---|---|---|---|
| | | 1 | 2 | 3 | 4 | 6 | 5 | 7 | 8 | 1 | 2 | 3 | 4 | 5 |
| Monomers used for polymeization | | | | | | | | | | | | | | |
| Methacrylonitrile | (Parts) | 7 | 14 | 21 | 16 | 12 | 18 | 23 | 18 | 28 | 0 | 26,6 | 1,4 | 0 |
| Acrylonitrile | (Parts) | 21 | 14 | 7 | 16 | 23 | 18 | 12 | 18 | 0 | 28 | 1,4 | 26,6 | 36 |
| 2-Methoxyethyl acrylate | (Parts) | 30 | 30 | 30 | 15 | 0 | 0 | 0 | 0 | 30 | 30 | 30 | 30 | 0 |
| 1,3-Butadiene | (Parts) | 40 | 40 | 40 | 51,5 | 63,5 | 62,5 | 63,5 | 64 | 40 | 40 | 40 | 40 | 64 |
| Methacrylic acid | (Parts) | 2 | 2 | 2 | 1,5 | 1,5 | 1,5 | 1,5 | 0 | 2 | 2 | 2 | 2 | 0 |
| Monomer composition of nitrile group-containing copolymer rubber | | | | | | | | | | | | | | |
| Methacrylonitrile unit | (wt%) | 8 | 15 | 22,5 | 18 | 13 | 19 | 24 | 20 | 30 | 0 | 28 | 1,7 | 0 |
| Acrylonitrile unit | (wt%) | 21 | 14 | 7 | 17 | 23 | 18 | 12 | 18 | 0 | 29 | 1,5 | 27,8 | 36 |
| 2-Methoxyethyl acrylate unit | (wt%) | 22 | 22 | 22 | 13 | 0 | 0 | 0 | 0 | 22 | 22 | 22,5 | 22,5 | 0 |
| 1,3-Butadiene unit (including hydrogenated me | (wt%) | 46,9 | 46,9 | 46,4 | 50,4 | 62,4 | 61,4 | 62,4 | 62 | 45,9 | 46,9 | 45,9 | 46,9 | 64 |
| Methacrylic acid unit | (wt%) | 2,1 | 2,1 | 2,1 | 1,6 | 1,6 | 1,6 | 1,6 | 0 | 2,1 | 2,1 | 2,1 | 2,1 | 0 |
| Iodine value of nitrile group-containing copolymer rubber | | 8 | 8 | 8 | 8 | 8 | 8 | 8 | 8 | 8 | 8 | 8 | 8 | 8 |
| Mooney viscosity of nitrile group-containing copolymer rubbe | | 60 | 50 | 40 | 60 | 70 | 65 | 70 | 70 | 50 | 50 | 50 | 50 | 80 |
| Normal physical properties | | | | | | | | | | | | | | |
| Tensile strength | (MPa) | 15 | 15 | 12,8 | 16,5 | 18,9 | 20,8 | 20,6 | 23,2 | 9,5 | 16 | 10,3 | 17,2 | 22,9 |
| Elongation | (%) | 340 | 390 | 380 | 340 | 360 | 340 | 350 | 350 | 370 | 340 | 370 | 330 | 340 |
| Hardness | | 66 | 65 | 64 | 66 | 67 | 68 | 67 | 69 | 62 | 66 | 62 | 66 | 70 |
| Heat resistance test (150°C, 504 hours) | | | | | | | | | | | | | | |
| Change rate in tensile strength | (%) | -7 | -15 | -2 | -6 | -3 | -2 | -6 | -4 | 21 | -9 | 20 | -10 | -3 |
| Elongation after heat resistance test | (%) | 150 | 160 | 180 | 190 | 220 | 230 | 230 | 220 | 190 | 160 | 200 | 170 | 240 |
| Oil resistance test (IRM903) | | | | | | | | | | | | | | |
| Volume change rate | (%) | 9 | 12 | 14 | 15 | 13 | 17 | 16 | 17 | 19 | 7 | 19 | 7 | 7 |
| Elongation after oil resistance test | (%) | 240 | 260 | 240 | 270 | 270 | 270 | 250 | 270 | 230 | 240 | 230 | 220 | 240 |

EP 4 349 877 A1

19

(continued)

| | | | | | | | | | | | | | | | |
|---|---|---|---|---|---|---|---|---|---|---|---|---|---|---|---|
| Fuel oil resistance test | Change rate in tensile strength | (%) | 9 | 5 | 12 | 12 | 13 | 16 | 17 | 13 | 14 | 8 | 15 | 8 | 8 |
| | Elongation after fuel oil resistance test | (%) | 230 | 260 | 300 | 300 | 290 | 310 | 300 | 270 | 320 | 240 | 300 | 250 | 280 |
| Test of resistance to hardening in oil under heated environment (using polycyclic condensed aromatic compound) | Change rate in glass transition temperature | (°C) | 7,4 | 4,7 | 3,4 | 6,7 | 5,5 | 3,1 | 2,2 | 3,1 | 0,8 | 11,2 | 1,2 | 11,2 | 12,0 |
| | Change in hardness | | 1,8 | 0,4 | 1,3 | -2,2 | 1,2 | -2,3 | 0,6 | -1,8 | 3,0 | 20,0 | 1,8 | 20,0 | 22,0 |

Table 1

| | | Example | | | | | | | | Comparative Example | | | | |
|---|---|---|---|---|---|---|---|---|---|---|---|---|---|---|
| | | 1 | 2 | 3 | 4 | 6 | 5 | 7 | 8 | 1 | 2 | 3 | 4 | 5 |
| Monomers used for polymerization | | | | | | | | | | | | | | |
| Methacrylonitrile | (Parts) | 7 | 14 | 21 | 16 | 12 | 18 | 23 | 18 | 28 | 0 | 26.6 | 1.4 | 0 |
| Acrylonitrile | (Parts) | 21 | 14 | 7 | 16 | 23 | 18 | 12 | 18 | 0 | 28 | 1.4 | 26.6 | 36 |
| 2-Methoxyethyl acrylate | (Parts) | 30 | 30 | 30 | 15 | 0 | 0 | 0 | 0 | 30 | 30 | 30 | 30 | 0 |
| 1,3-Butadiene | (Parts) | 40 | 40 | 40 | 51.5 | 63.5 | 62.5 | 63.5 | 64 | 40 | 40 | 40 | 40 | 64 |
| Methacrylic acid | (Parts) | 2 | 2 | 2 | 1.5 | 1.5 | 15 | 1.5 | 0 | 2 | 2 | 2 | 2 | 0 |
| Monomer composition of nitrile group-containing copolymer rubber | | | | | | | | | | | | | | |
| Methacrylonitrile unit | (wt%) | 8 | 15 | 22.5 | 18 | 13 | 19 | 24 | 20 | 30 | 0 | 28 | 1.7 | 0 |
| Acrylonitrile unit | (wt%) | 21 | 14 | 7 | 17 | 23 | 18 | 12 | 18 | 0 | 29 | 1.5 | 27.8 | 36 |
| 2-Methoxyethyl acrylate unit | (wt%) | 22 | 22 | 22 | 13 | 0 | 0 | 0 | 0 | 22 | 22 | 22.5 | 22.5 | 0 |
| 1,3-Butadiene unit (including hydrogenated moieties) | (wt%) | 46.9 | 46.9 | 46.4 | 50.4 | 62.4 | 61.4 | 62.4 | 62 | 45.9 | 46.9 | 45.9 | 46.9 | 64 |
| Methacrylic acid unit | (wt%) | 2.1 | 2.1 | 2.1 | 1.6 | 16 | 16 | 16 | 0 | 21 | 21 | 2.1 | 2.1 | 0 |
| Iodine value of nitrile group-containing copolymer rubber | | 8 | 8 | 8 | 8 | 8 | 8 | 8 | 8 | 8 | 8 | 8 | 8 | 8 |
| Mooney viscosity of nitrile group-containing copolymer rubber | | 60 | 50 | 40 | 60 | 70 | 65 | 70 | 70 | 50 | 50 | 50 | 50 | 80 |
| Normal physical properties | | | | | | | | | | | | | | |
| Tensile strength | (MPa) | 15 | 15 | 12.8 | 16.5 | 18.9 | 20.8 | 20.6 | 23.2 | 9.5 | 16 | 10.3 | 17.2 | 22.9 |
| Elongation | (%) | 340 | 390 | 380 | 340 | 360 | 340 | 350 | 350 | 370 | 340 | 370 | 330 | 340 |
| Hardness | | 66 | 65 | 64 | 66 | 67 | 68 | 67 | 69 | 62 | 66 | 62 | 66 | 70 |
| Heat resistance test (150°C, 504 hours) | | | | | | | | | | | | | | |
| Change rate in tensile strength | (%) | -7 | -15 | -2 | -6 | -3 | -2 | -6 | -4 | 21 | -9 | 20 | -10 | -3 |
| Elongation after heat resistance test | (%) | 150 | 160 | 180 | 190 | 220 | 230 | 230 | 220 | 190 | 160 | 200 | 170 | 240 |
| Oil resistance test (IRM903) | | | | | | | | | | | | | | |
| Volume change rate | (%) | 9 | 12 | 14 | 15 | 13 | 17 | 16 | 17 | 19 | 7 | 19 | 7 | 7 |
| Elongation after oil resistance test | (%) | 240 | 260 | 240 | 270 | 270 | 270 | 250 | 270 | 230 | 240 | 230 | 220 | 240 |

EP 4 349 877 A1

21

(continued)

| Fuel oil resistance test | | | | | | | | | | | | | | |
|---|---|---|---|---|---|---|---|---|---|---|---|---|---|---|
| Change rate in tensile strength | (%) | 9 | 5 | 12 | 12 | 13 | 16 | 17 | 13 | 14 | 8 | 15 | 8 | 8 |
| Elongation after fuel oil resistance test | (%) | 230 | 260 | 300 | 300 | 290 | 310 | 300 | 270 | 320 | 240 | 300 | 250 | 280 |
| Test of resistance to hardening in oil under heated environment (using polycyclic condensed aromatic compound) | | | | | | | | | | | | | | |
| Change rate in glass transition temperature | (°C) | 7.4 | 4.7 | 3.4 | 6.7 | 5.5 | 3.1 | 2.2 | 3.1 | 0.8 | 11.2 | 1.2 | 11.2 | 12.0 |
| Change in hardness | | 1.8 | 0.4 | 1.3 | -2.2 | 1.2 | -2.3 | 0.6 | -1.8 | 3.0 | 20.0 | 1.8 | 20.0 | 22.0 |

As shown in Table 1, according to the nitrile group-containing copolymer rubbers comprising an acrylontrile unit (a), a monomer unit (b) of an α, β-ethylenically unsaturated nitrile monomer other than acrylonitrile, and a conjugated diene monomer unit (c) and having an iodine value of 120 or less and having a content ratio of the acrylonitrile unit (a) and the monomer unit (b) of an α, β-ethylenically unsaturated nitrile monomer other than acrylonitrile in a specific range, the cross-linked rubbers obtained using the same had good normal physical properties and excellent heat resistance, and exhibited excellent oil resistance in both cases when the test lubricating oil IRM903 was used and when the fuel oil was used, and they were excellent in resistance to hardening in oil under a heated environment (specifically, were small in change in glass transition temperature and change in hardness when immersed in an oil containing a polycyclic condensed aromatic compound after being stored in a heated environment) (Examples 1 to 8).

On the other hand, in case of the nitrile group-containing copolymer rubber which did not contain an acrylonitrile unit (a), the cross-linked rubber obtained using the same had low tensile strength in normal state, and also had a large volume change rate when immersed in the test lubricating oil IRM903, not sufficient oil resistance, and further had a large hardness change when immersed in an oil containing a polycyclic condensed aromatic compound after being stored in a heated environment, and was inferior in resistance to hardening in oil under a heated environment (Comparative Example 1).

Further, in case of the nitrile group-containing copolymer rubber which did not contain a monomer unit (b) of an α,β-ethylenically unsaturated nitrile monomer other than acrylonitrile or in case of the nitrile group-containing copolymer rubber where the amount of a monomer unit (b) of an α,β-ethylenically unsaturated nitrile monomer other than acrylonitrile was too small, the cross-linked rubber obtained using the same had a particularly large change in glass transition temperature and a particularly large hardness change when immersed in an oil containing a polycyclic condensed aromatic compound after being stored under a heated environment, and was particularly inferior in resistance to hardening in oil under a heated environment (Comparative Examples 2, 4, and 5).

In case of the nitrile group-containing copolymer rubber where the amount of an acrylonitrile unit (a) was too small, the cross-linked

As shown in Table 1, according to the nitrile group-containing copolymer rubbers comprising an acrylonitrile unit (a), a monomer unit (b) of an α,β-ethylenically unsaturated nitrile monomer other than acrylonitrile, and a conjugated diene monomer unit (c) and having an iodine value of 120 or less and having a content ratio of the acrylonitrile unit (a) and the monomer unit (b) of an α,β-ethylenically unsaturated nitrile monomer other than acrylonitrile in a specific range, the cross-linked rubbers obtained using the same had good normal physical properties and excellent heat resistance, and exhibited excellent oil resistance in both cases when the test lubricating oil IRM903 was used and when the fuel oil was used, and they were excellent in resistance to hardening in oil under a heated environment (specifically, were small in change in glass transition temperature and change in hardness when immersed in an oil containing a polycyclic condensed aromatic compound after being stored in a heated environment) (Examples 1 to 8).

On the other hand, in case of the nitrile group-containing copolymer rubber which did not contain an acrylonitrile unit (a), the cross-linked rubber obtained using the same had low tensile strength in normal state, and also had a large volume change rate when immersed in the test lubricating oil IRM903, not sufficient oil resistance, and further had a large hardness change when immersed in an oil containing a polycyclic condensed aromatic compound after being stored in a heated environment, and was inferior in resistance to hardening in oil under a heated environment (Comparative Example 1).

Further, in case of the nitrile group-containing copolymer rubber which did not contain a monomer unit (b) of an α,β-ethylenically unsaturated nitrile monomer other than acrylonitrile or in case of the nitrile group-containing copolymer rubber where the amount of a monomer unit (b) of an α,β-ethylenically unsaturated nitrile monomer other than IRM903 was used and when the fuel oil was used, and they were excellent in resistance to hardening in oil under a heated environment (specifically, were small in change in glass transition temperature and change in hardness when immersed in an oil containing a polycyclic condensed aromatic compound after being stored in a heated environment) (Examples 1 to 8).

On the other hand, in case of the nitrile group-containing copolymer rubber which did not contain an acrylonitrile unit (a), the cross-linked rubber obtained using the same had low tensile strength in normal state, and also had a large volume change rate when immersed in the test lubricating oil IRM903, not sufficient oil resistance, and further had a large hardness change when immersed in an oil containing a polycyclic condensed aromatic compound after being stored in a heated environment, and was inferior in resistance to hardening in oil under a heated environment (Comparative Example 1).

Further, in case of the nitrile group-containing copolymer rubber which did not contain a monomer unit (b) of an α,β-ethylenically unsaturated nitrile monomer other than acrylonitrile or in case of the nitrile group-containing copolymer rubber where the amount of a monomer unit (b) of an α,β-ethylenically unsaturated nitrile monomer other than acrylonitrile was too small, the cross-linked rubber obtained using the same had a particularly large change in glass transition temperature and a particularly large hardness change when immersed in an oil containing a polycyclic condensed aromatic compound after being stored under a heated environment, and was particularly inferior in resistance to hardening in oil under a heated environment (Comparative Examples 2, 4, and 5).

In case of the nitrile group-containing copolymer rubber where the amount of an acrylonitrile unit (a) was too small, the cross-linked rubber obtained using the same had low tensile strength in normal state, and also had a large volume change rate when immersed in the test lubricating oil IRM903, not sufficient oil resistance (Comparative Example 3). acrylonitrile was too small, the cross-linked rubber obtained using the same had a particularly large change in glass transition temperature and a particularly large hardness change when immersed in an oil containing a polycyclic condensed aromatic compound after being stored under a heated environment, and was particularly inferior in resistance to hardening in oil under a heated environment (Comparative Examples 2, 4, and 5) .

In case of the nitrile group-containing copolymer rubber where the amount of an acrylonitrile unit (a) was too small, the cross-linked rubber obtained using the same had low tensile strength in normal state, and also had a large volume change rate when immersed in the test lubricating oil IRM903, not sufficient oil resistance (Comparative Example 3).

rubber obtained using the same had low tensile strength in normal state, and also had a large volume change rate when immersed in the test lubricating oil IRM903, not sufficient oil resistance (Comparative Example 3).

**Claims**

1. A nitrile group-containing copolymer rubber comprising an acrylonitrile unit (a), a monomer unit (b) of an $\alpha,\beta$-ethylenically unsaturated nitrile monomer other than acrylonitrile, and a conjugated diene monomer unit (c) and having an iodine value of 120 or less,

   wherein the total content of the acrylonitrile unit (a) and the monomer unit (b) of an $\alpha,\beta$-ethylenically unsaturated nitrile monomer other than acrylonitrile is 1 to 50% by weight in the total monomer units, and
   wherein the content ratio of the acrylonitrile unit (a) and the monomer unit (b) of an $\alpha,\beta$-ethylenically unsaturated nitrile monomer other than acrylonitrile is 10:90 to 90:10 in a weight ratio of "content of acrylonitrile unit (a) : content of monomer unit (b) of $\alpha,\beta$-ethylenically unsaturated nitrile monomer other than acrylonitrile".

2. The nitrile group-containing copolymer rubber according to claim 1, wherein the $\alpha,\beta$-ethylenically unsaturated nitrile monomer other than acrylonitrile constituting the monomer unit (b) of an $\alpha,\beta$-ethylenically unsaturated nitrile monomer other than acrylonitrile has 2 to 5 carbon atoms excluding the cyano group.

3. The nitrile group-containing copolymer rubber according to claim 1 or 2, wherein the total content of the acrylonitrile unit (a) and the monomer unit (b) of an $\alpha,\beta$-ethylenically unsaturated nitrile monomer other than acrylonitrile is 10 to 45% by weight in the total monomer units.

4. The nitrile group-containing copolymer rubber according to any one of claims 1 to 3, wherein the iodine value is 80 or less.

5. The nitrile group-containing copolymer rubber according to any one of claims 1 to 4, wherein the content ratio of the acrylonitrile unit (a) and the monomer unit (b) of an $\alpha,\beta$-ethylenically unsaturated nitrile monomer other than acrylonitrile is 20:80 to 80:20 in a weight ratio of "content of acrylonitrile unit (a) : content of monomer unit (b) of $\alpha,\beta$-ethylenically unsaturated nitrile monomer other than acrylonitrile".

6. The nitrile group-containing copolymer rubber according to any one of claims 1 to 5, wherein the content ratio of the acrylonitrile unit (a) and the monomer unit (b) of an $\alpha,\beta$-ethylenically unsaturated nitrile monomer other than acrylonitrile is 25:75 to 75:25 in a weight ratio of "content of acrylonitrile unit (a) : content of monomer unit (b) of $\alpha,\beta$-ethylenically unsaturated nitrile monomer other than acrylonitrile".

7. The nitrile group-containing copolymer rubber according to any one of claims 1 to 6, wherein the content of the conjugated diene monomer unit (c) is 10 to 90% by weight.

8. A rubber composition comprising the nitrile group-containing copolymer rubber according to any one of claims 1 to 7 blended with a cross-linking agent.

9. A cross-linked rubber obtained by cross-linking the rubber composition according to claim 8.

## INTERNATIONAL SEARCH REPORT

| International application No. |
| --- |
| **PCT/JP2022/021275** |

### A.    CLASSIFICATION OF SUBJECT MATTER

*C08F 236/12*(2006.01)i; *C08C 19/02*(2006.01)i; *C08F 8/04*(2006.01)i; *C08L 15/00*(2006.01)i
FI:    C08F236/12; C08C19/02; C08F8/04; C08L15/00

According to International Patent Classification (IPC) or to both national classification and IPC

### B.    FIELDS SEARCHED

Minimum documentation searched (classification system followed by classification symbols)
C08F2/00-299/08; C08C19/00-19/44; C08L1/00-101/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)
CAplus/REGISTRY (STN)

### C.    DOCUMENTS CONSIDERED TO BE RELEVANT

| Category* | Citation of document, with indication, where appropriate, of the relevant passages | Relevant to claim No. |
| --- | --- | --- |
| X | JP 62-240338 A (NIPPON ZEON CO LTD) 21 October 1987 (1987-10-21)<br>claims, column "examples" (for example, example 17 of the present invention), etc. | 1-9 |
| X | JP 62-230837 A (NIPPON ZEON CO LTD) 09 October 1987 (1987-10-09)<br>claims, column "examples" (for example, example 15 of the present invention), etc. | 1-9 |
| X | JP 63-95242 A (NIPPON ZEON CO LTD) 26 April 1988 (1988-04-26)<br>claims, column "examples" (for example, example 12 of the present invention), etc. | 1-9 |
| X | JP 62-156144 A (JAPAN SYNTHETIC RUBBER CO LTD) 11 July 1987 (1987-07-11)<br>claims, column "examples" (for example, example 2 of the present invention), etc. | 1-9 |
| X | JP 5-222267 A (NIPPON ZEON CO LTD) 31 August 1993 (1993-08-31)<br>claims, column "examples" (for example, examples 3-5 of the present invention), etc. | 1-9 |
| X | JP 5-222244 A (NIPPON ZEON CO LTD) 31 August 1993 (1993-08-31)<br>claims, column "examples" (for example, examples 4-6 of the present invention), etc. | 1-9 |
| X | US 3697489 A (BORG-WARNER CORP.) 10 October 1972 (1972-10-10)<br>claims, column "examples", etc. | 1-9 |

| ✓ | Further documents are listed in the continuation of Box C. | ✓ | See patent family annex. |
| --- | --- | --- | --- |

\*      Special categories of cited documents:
"A"    document defining the general state of the art which is not considered to be of particular relevance
"E"     earlier application or patent but published on or after the international filing date
"L"     document which may throw doubts on priority claim(s) or which is cited to establish the publication date of another citation or other special reason (as specified)
"O"    document referring to an oral disclosure, use, exhibition or other means
"P"     document published prior to the international filing date but later than the priority date claimed

"T"     later document published after the international filing date or priority date and not in conflict with the application but cited to understand the principle or theory underlying the invention
"X"     document of particular relevance; the claimed invention cannot be considered novel or cannot be considered to involve an inventive step when the document is taken alone
"Y"     document of particular relevance; the claimed invention cannot be considered to involve an inventive step when the document is combined with one or more other such documents, such combination being obvious to a person skilled in the art
"&"     document member of the same patent family

| Date of the actual completion of the international search | Date of mailing of the international search report |
| --- | --- |
| **26 July 2022** | **09 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/021275**

### C. DOCUMENTS CONSIDERED TO BE RELEVANT

| Category* | Citation of document, with indication, where appropriate, of the relevant passages | Relevant to claim No. |
|-----------|-----------------------------------------------------------------------------------|:---------------------:|
| X | US 3753959 A (JAPAN SYNTHETIC RUBBER CO LTD) 21 August 1973 (1973-08-21) claims, column "examples" (for example, example 156 of the present invention), etc. | 1-9 |
| A | JP 4-261407 A (BAYER AG) 17 September 1992 (1992-09-17) | 1-9 |
| P, X | JP 6962428 B1 (TOYO INK SC HOLDINGS CO LTD) 05 November 2021 (2021-11-05) claims, column "examples" (for example, copolymer 4, 5, 8), etc. | 1-9 |
| E, X | JP 2022-99288 A (TOYO INK SC HOLDINGS CO LTD) 04 July 2022 (2022-07-04) claims, column "examples" (for example, polymer B-2), etc. | 1-9 |

Form PCT/ISA/210 (second sheet) (January 2015)

**INTERNATIONAL SEARCH REPORT**
Information on patent family members

International application No.

**PCT/JP2022/021275**

| Patent document cited in search report | | | Publication date (day/month/year) | Patent family member(s) | | | Publication date (day/month/year) |
|---|---|---|---|---|---|---|---|
| JP | 62-240338 | A | 21 October 1987 | (Family: none) | | | |
| JP | 62-230837 | A | 09 October 1987 | (Family: none) | | | |
| JP | 63-95242 | A | 26 April 1988 | (Family: none) | | | |
| JP | 62-156144 | A | 11 July 1987 | (Family: none) | | | |
| JP | 5-222267 | A | 31 August 1993 | (Family: none) | | | |
| JP | 5-222244 | A | 31 August 1993 | (Family: none) | | | |
| US | 3697489 | A | 10 October 1972 | GB | 1323456 | A | |
| US | 3753959 | A | 21 August 1973 | (Family: none) | | | |
| JP | 4-261407 | A | 17 September 1992 | EP | 471250 | A1 | |
| JP | 6962428 | B1 | 05 November 2021 | (Family: none) | | | |
| JP | 2022-99288 | A | 04 July 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017047571 A